# EUROPÄISCHE PATENTSCHRIFT

(11) **EP 0 752 582 B1**
(45) Veröffentlichungstag und Bekanntmachung des Hinweises auf die Patenterteilung: **02.01.2002**
(21) Anmeldenummer: 96110658.0
(22) Anmeldetag: 02.07.1996
(51) Int. Cl.: G01L 23/22

(54) **Schaltungsanordnung zur Ionenstrommessung**
Measuring circuit for an ionic current
Circuit de mesure pour courant ionique

(30) Priorität: 05.07.1995 DE 19524539
(43) Veröffentlichungstag der Anmeldung: 08.01.1997
(73) Patentinhaber: Conti Temic microelectronic GmbH, 90411 Nürnberg (DE); DaimlerChrysler AG, 70567 Stuttgart (DE)
(72) Erfinder: Hohner, Peter, 70771 Echterdingen (DE); Schirmer, Jens, 74074 Heilbronn (DE)
(74) Vertreter: Maute, Hans-Jürgen, Dipl.-Ing.

(56) Entgegenhaltungen:
- EP-A- 0 070 572
- DE-A- 3 327 766
- DE-A- 3 339 569
- DE-A- 3 928 726

## Beschreibung

Die Erfindung betrifft eine Schaltungsanordnung zur Ionenstrommessung gemäß dem Oberbegriff des Patentanspruches 1 bzw. 5.

Eine solche Schaltungsanordnung ist aus der DE 33 27 766 A1 bekannt, die zur Klopferkennung an einer 8rennkraftmaschine dient und bei der im Brennraum jedes Zylinders eine gleichzeitig als Ionenstromsonde dienende Zündkerze ang eordnet ist. Um ein Meßsignal für den Ionenstrom zu erhalten, wird auf der Primärseite der Zündspule eine Wechselspannung erzeugt, die sekundärseitig zu einem Meßsignal des Ionenstromes führt, dem dessen Schwankungen aufmoduliert sind. Dieses amplitudenmodulierte sekundärseitige Wechselspannungssignal wird sekundärseitig ausgekoppelt und in einer Auswerteschaltung bearbeitet.

Diese bekannte Schaltungsanordnung umfaßt eine Transistorzündung, wobei zur Erzeugung des primärseitigen Wechselspannungssignals ein Hochfrequenzgenerator dient, dessen impulsförmige Ausgangssignale der Steuerelektrode des Zündtransistors zugeführt werden.

Der Nachteil dieser bekannten Schaltung besteht darin, daß ein Hochfrequenzoszillator erforderlich ist, der den Aufwand einer Zündendstufe erhöht und somit auch zu zusätzlichen Kosten führt.

Der Erfindung liegt daher die Aufgabe zugrunde, eine Schaltungsanordnung der eingangs genannten Art anzugeben, die gegenüber der bekannten Schaltungsanordnung zur Ionenstrommessung einen einfacheren Aufbau aufweist.

Diese Aufgabe wird gemäß den kennzeichnenden Merkmalen des Patentanspruches 1 gelöst, wonach eine nach dem Prinzip der Wechselstromzündung arbeitende Zündendstufe, wie sie aus der DE 39 28 726 A1 bekannt ist, gleichzeitig dazu verwendet wird, primärseitig das der Ionenstrommessung dienende Wechselstromsignal zu erzeugen. Hierzu ist lediglich erforderlich, daß der den im Primärkreis der Zündspule angeordnete Schwingkreis steuernde Schalter, der als Transistor ausgeführt ist, so von einer Regelschaltung angesteuert wird, daß in diesem Schwingkreis Schwingungen entstehen, die sekundärseitig nicht zur Einleitung einer Zündung ausreichen. Ein solches Wechselspannungssignal wird primärseitig im Anschluß an eine erfolgte Zündung erzeugt.

Die Ankopplung des Meßsignales wird bei Verwendung einer als Trenntransformator aufgebauten Zündspule, die also eine Primär- und Sekundärwicklung aufweist, mittels einer im Sekundärkreis der Zündspule angeordneten Meßanordnung vorgenommen.

Eine vorteilhafte Weiterbildung liegt auch in der Verwendung eines Spartransformators als Zündspule. In diesem Fall wird das Meßsignai des Ionenstromes mittels einer auf der Primärseite des Spartransformators angeschlossenen Meßanordnung abgegriffen, da dort keine Hochspannung anliegt. Bei dieser Ausführungsform der Erfindung entfallen sekundärseitige Bauelemente.

Um das Meßsignal zuverlässig auswerten zu können, sollte die Frequenz des eingekoppelten Wechselspannungssignales so gewählt werden, daß dessen Frequenz möglichst weit von der Frequenz der Schwankungen des Ionenstromes entfernt ist, da dies die Ausblendung des Ionenstromsignales erleichtert.

Bei hochfrequentem Ionenstromsignal sollte die Frequenz des primärseitigen Wechselspannungssignales sehr gering gewählt werden, so daß sich das Ionenstromsignal auf die erste Halbwelle moduliert, die damit eine quasistationäre Gleichspannung in einem entsprechenden Meßintervall darstellt. Dagegen wäre bei einem niederfrequenten Ionenstromsignal eine hohe Frequenz für das primärseitige Wechselspannungssignal zu wählen.

Eine weitere Lösung ist mit den kennzeichnenden Merkmalen des Patentanspruches 6 gegeben. Hiernach wird bei einer Wechselstromzündung als Zündspule ein Spartransformator eingesetzt, der an seinem primärseitigen Ende mit einer im Mittelspannungsbereich liegenden Zwischenkreisspannung versorgt wird. Diese Zwischenkreisspannung dient im Anschluß an die Funkenbrennphase als Meßspannung, da diese Gleichspannung in Abhängigkeit des Nutzsignals moduliert wird.

Im Folgenden soll die Erfindung anhand von Ausführungsbeispielen im Zusammenhang mit den Figuren dargestellt und erläutert werden. Es zeigen:
Figur 1 ein Blockschaltbild einer erfindungsgemäßen Schaltungsanordnung zur Ionenstrommessung,
Figur 1a ein Schaltbild eines Ausführungsbeispieles einer in Figur 1 gezeigten Meßanordnung 4,
Figur 2 eine schematische Darstellung einer Zündspule mit den zur Erzeugung eines Ionenstrommeßsignales erforderlichen Wechselspannungssignalen,
Figuren 3a und 3b Zeit-Spannungs-Diagramme zur Erläuterung der Erzeugung eines lonenstrommeßsignales und
Figur 4 ein Blockschaltbild einer erfindungsgemäßen Schaltungsanordnung gemäß der Erfindung mit einem Spartransformator als Zündspule.

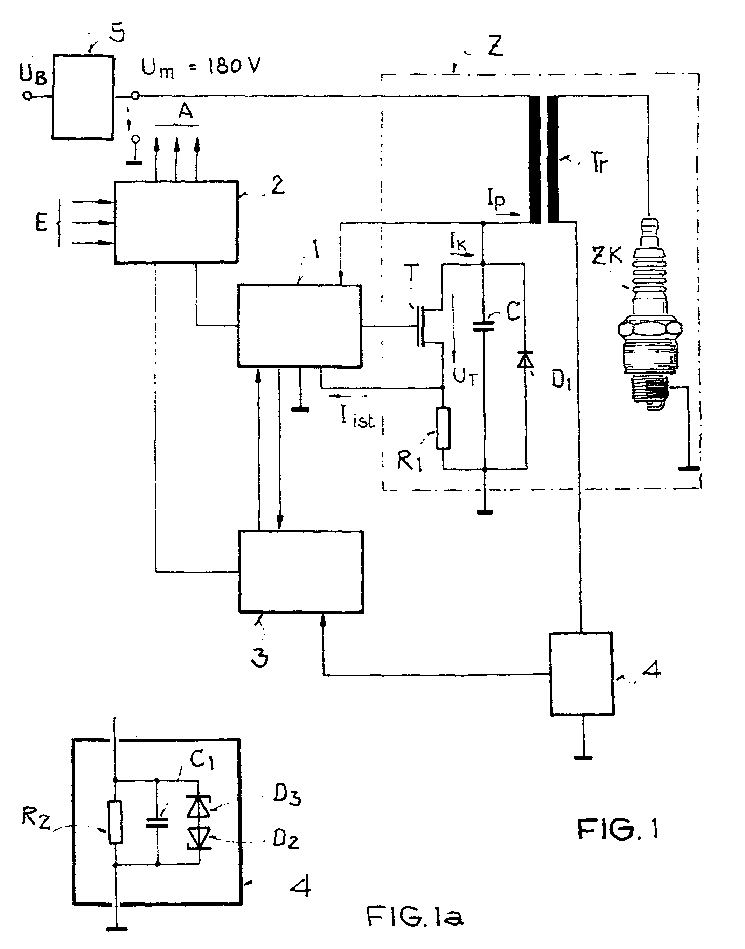

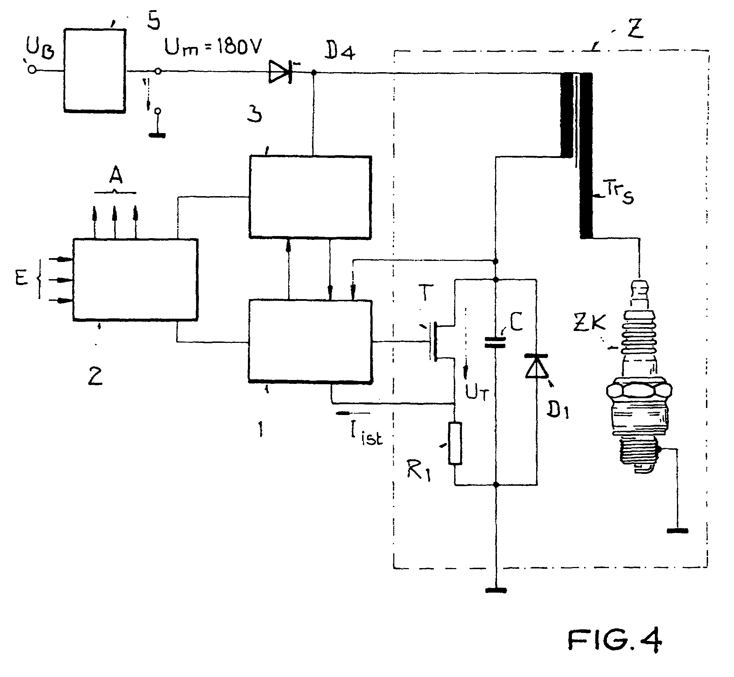

Obwohl die in den Figuren 1 und 4 dargestellten Wechselstromzündungen für Mehrzylinder-Brennkraftmaschinen geeignet sind, ist der Einfachheit halber jeweils nur eine Zündendstufe Z mit einer Zündkerze Zk gezeichnet.

Die Zündendstufe Z gemäß Figur 1 enthält eine Zündspule Tᵣ mit Primär- und Sekundärwicklung, wobei an die Sekundärwicklung die schon genannte Zündkerze Zk angeschlossen ist. Die Primärwicklung ist mit ihrem einen Anschluß mit einer Zwischenkreisspannung Uₘ und mit ihrem anderen Anschluß mit einem Kondensator C zur Bildung eines Schwingkreises verbunden. Parallel zu diesem Kondensator C ist eine Energierückgewinnungsdiode D1 sowie eine Serienschaltung aus einem Transistor T und einem Stromshunt R₁ geschaltet. Der Transistor T erhält Steuersignale von einer Regelschaltung 1, die auch zur Erfassung des Ist-Wertes des über diesen Transistor T fließenden Stromes mit dem Stromshunt R₁ verbunden ist.

Ein Steuergerät 2 übernimmt die Funktion eines Motormanagements und ist mit der Regelschaltung 1 verbunden, um über diese Verbindung für eine korrekte Zündverteilung zu sorgen. Hierzu werden dieser Steuereinheit 2 über einen Eingang E Motorparameter, wie Last, Drehzahl und Temperatur zugeführt. Entsprechende Aktuatoren werden über Ausgänge A gesteuert.

Die Zündendstufe Z arbeitet im stronkontrollierten Sperr- und Durchflußwandlerbetrieb. Für die Dauer des Einschaltvorganges des Transistors T fließt ein Kollektorstrom Iₖ, der dem Primärspulenstrom Iₚ entspricht. Dieser Kollektorstrom Iₖ wird durch die Regelschaltung 1 auf einen bestimmten Wert Iₛₒₗₗ begrenzt. Um eine kurze Ladezeit zu erreichen, wird die Primärspule der Zündspule Tr mit einer von einem Schaltnetzteil 5 erzeugten Zwischenkreisspannung Uₘ=180V versorgt. Das Schaltnetzteil seinerseits wird von der Bordspannung U_{B} gespeist. Hat der Kollektorstrom Iₖ den durch Iₛₒₗₗ vorgegebenen Wert erreicht, wird der Transistor T abgeschaltet. Die in der Speicherspule enthaltene Energie regt den Ausgangskreis (Sekundärinduktivität, Zündkerzenkapazität) zum schwingen an. Ein Teil der Energie transferiert in den Kondensator C und der andere Teil in die Zündkerzenkapazität. Die Spannung am Kondensator C und die Zündspannung an der Zündkerze Zk steigen sinusförmig an, bis keine Energie mehr in der Speicherspule, also der Primärspule vorhanden ist. Nun wird die kapazitiv gespeicherte Energie wieder der Primärspuleninduktivität zugeführt, bis die Spannung am Kondensator C den Wert Null erreicht. Zu diesem Zeitpunkt gibt die Sekundärspule sekundärseitig ihre vorhandene Energie in die Zündkerzenkapazität ab. Primärseitig ist dies analog für den Kondensator C nicht möglich, da die Spannung am Kollektor des Transistors T aufgrund der leitend gewordenen Energierückgewinnungsdiode D1 nicht negativ werden kann. Die in der Primärinduktivität vorhandene Energie wird daher über diese Diode D1 ins Bordnetz zurückgeliefert. Sekundärseitig läuft die Schwingung aufgrund der nur ca. 50% starken Kopplung zwischen Primär- und Sekundärinduktivität weiter. Während dieses Zeitabschnittes wird der Transistor T wieder eingeschaltet, da nunmehr die gleichen Spannungsverhältnisse wie vor dem ersten Einschalten des Transistors vorliegen. Durch die Stromkontrolle wird immer die gleiche Energiezufuhr in die Primärspule garantiert. Der Anteil der eingespeisten Energie, der nicht im Funkenkanal benötigt wurde, wird wieder vollständig in das Bordnetz zurückgespeist. Die Kopplung von ca. 50% verhindert bei einem Funkendurchbruch eine totale Bedämpfung des Primärschwingkreises durch den stark gedämpften Sekundärschwingkreis.

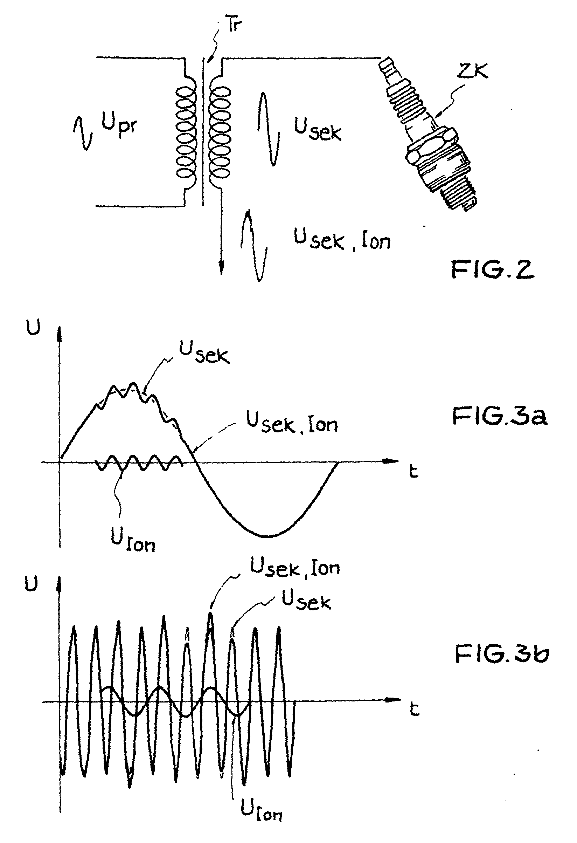

Zwischen zwei Zündzyklen kann nun der Transistor T von der Regelschaltung 1 derart angesteuert werden, daß nach einer beliebig wählbaren Funkenbrenndauer an der Zündkerze Zk im Primärkreis ein Wechselspannungssignal Upr in Form von Schwingkreisschwingungen erzeugt wird, dessen Amplitude hinreichend gering ist, um sekundärseitig keine Zündfunken herbeizuführen. Die Amplitude der Sekundärspannung Uₛₑₖ sollte dann Mittelspannungsniveau, beispielsweise < 1 kV haben (vergleiche Figur 2). Dieses sekundärseitige Wechselspannungssignal Uₛₑₖ bewirkt einen Stromfluß über die ionisierte Zündfunkenstrecke. Dabei bewirken Schwankungen des Ionenstromes eine Amplitudenmodulation des sekundärseitigen Wechselspannungssignales Uₛₑₖ, das in der Figur 2 als U_{sek,Ion} bezeichnet ist.

Diese Spannungsgrößen Uₛₑₖ, U_{sek, Ion} und das eigentliche Ionenstrommeßsignal U_{Ion} sind zur Verdeutlichung in den Zeit-Spannungs-Diagrammen nach den Figuren 3a und 3b dargestellt, wobei U_{Ion} der Einfachheit halber sinusförmig gezeichnet ist.

Die Frequenz f_{Upr} des primärseitig erzeugten Wechselspannungssignals Uₚᵣ sollte möglichst weit von der Frequenz f_{UIon} des Ionenstromsignals U_{Ion} entfernt liegen, da dies die Auskopplung des Meßsignales erleichtert. So erfordert beispielsweise ein hochfrequentes Ionenstromsignal U_{Ion} eine niedrige Frequenz f_{Upr} des Wechselspannungssignales Uₚᵣ, so daß sich dieses Ionenstromsignal U_{Ion} auf die erste Halbwelle des Wechselspannungssignales Uₛₑₖ aufmoduliert, womit sich in dem entsprechenden Meßintervall eine quasistationäre Gleichspannung einstellt, wie dies in Figur 3a dargestellt ist. Den umgekehrten Fall zeigt Figur 3b, wo bei niedrigen Frequenzen des Ionenstromsignales U_{Ion} die Frequenz des Wechselspannungssignales Uₚᵣ sehr viel höher liegt, mit der Folge einer leichteren Auskopplung des Ionenstromsignales U_{Ion} über einen Tiefpaß. Das jeweils ausgekoppelte Ionenstromsignal U_{Ion} ist in den Figuren 3a und 3b ebenfalls dargestellt.

Das modulierte Wechselspannungssignal U_{sek,Ion} wird mit Hilfe einer Meßanordnung 4 am stromschwachen Ende der Sekundärwicklung der Zündspule Tr abgegriffen. Die Auskopplung kann mittels eines hochohmigen Widerstandes, einer Koppelspule, eines Kondensators, eines Halbleiterbauelementes oder aus einer Kombination dieser Elemente erfolgen, wie dies beispielhaft in Figur 1a mit einem Widerstand R₂, einem Kondensator C₁ und zwei in Reihe geschalteten Z-Dioden D₂ und D₃ gezeigt ist.

Die Wechselstromzündung nach Figur 2 unterscheidet sich von derjenigen nach Figur 1 lediglich dadurch, daß als Zündspule ein Spartransformator Trₛ verwendet wird. Mit dieser Schaltung nach Figur 2 läßt sich auf zweifache Weise ein Meßsignal für die Ionenstrommessung generieren.

Zunächst wird wie bei der Schaltung nach Figur 1 im Anschluß an die Funkenbrennphase der Transistor T derart angesteuert, daß primärseitig ein Wechselstromsignal entsteht, das sekundärseitig ein nicht zur Zündung führendes Wechselstromsignal induziert, jedoch in Abhängigkeit des Ionisationsgrades moduliert ist. Dieses modulierte Wechselstromsignal stellt das Meßsignal, also das eigentliche Ionenstromsignal dar und wird primärseitig zwischen einer mit dem Schaltnetzteil 5 verbundenen Schutzdiode D4 und dem primärseitigen Ende der Zündspule Trₛ abgegriffen und der Auswerteschaltung 3 zugeführt.

Die andere Möglichkeit der Generierung eines Ionenstromsignales besteht darin, die von dem Schaltnetzteil 5 gelieferte Zwischenkreisspannung Uₘ als Meßgleichspannung zu verwenden. Da die Zündspule Trₛ an ihrem primärseitigen Ende über die Schutzdiode D4 mit dem Schaltnetzteil 5 verbunden ist, liegt diese Zwischenkreispannung Uₘ, beispielsweise in Höhe von 180 V, ständig an der Zündkerze Zk an. Infolgedessen kann diese Gleichspannung Uₘ als Meßsignal zur Ionenstrommessung dienen, da im Anschluß an die Funkenbrennphase an der Zündkerze Zk diese Gleichspannung Uₘ in Abhängigkeit des Ionisationsgrades der Zündstrecke moduliert wird. Diese modulierte Gleichspannung Uₘ wird direkt einer Auswerteschaltung 3 zugeführt, so daß eine Auskoppelschaltung entfällt.

In den Auswerteschaltungen 3 gemäß den Figuren 1 und 4 erfolgt eine Signalaufbereitung beispielsweise mit einem Demodulator und einem oder mehreren Filtern, um hieraus Nutzsignale, also das Ionenstromsignal U_{Ion} zu generieren, die der Regelschaltung 1 als auch der Steuereinheit 2 zugeführt werden. Die Steuerung der Meßwerterfassung erfolgt über eine Verbindungsleitung von der Regelschaltung 1 zu der Auswerteschaltung 3 und wird mittels eines Meßfensters durchgeführt, um Störimpulse, die durch die Zündung hervorgerufen werden, auszublenden.

Aus den der Steuereinheit 2 zugeführten Nutzsignalen können Informationen über den Verbrennungsvorgang und das Motorverhalten abgeleitet werden, um hieraus Regelgrößen zur Steuerung der Wechselspannungszündanlage abzuleiten und der Regelschaltung 1 zuzuführen.

So kann beispielsweise eine Klopfsignalauswertung durchgeführt werden, die zu einer Regelung des Zündzeitpunktes führt und keinen störgeräuschanfälligen Körperschallsensor erfordert. Weiterhin kann mit der Information über den Verbrennungsvorgang eine Zündenergiesteuerung durchgeführt werden, insbesondere kann der Zylinderdruck bestimmt werden, der mit in die Lambda-Regelung und Einspritzsteuerung eingeht.

Weiterhin kann aus dem Nutzsignal eine Zylinder-1-Erkennung abgeleitet werden. Ferner lassen sich auch Zündaussetzer erkennen um damit Katalysatorschäden zu vermeiden. Schließlich kann eine Lasterkennung ebenfalls aus dem Nutzsignal abgeleitet werden, um hieraus eine zylinderselektive Laufruhenregelung und Zylinderfüllungsgleichverteilung durchzuführen.

## Patentansprüche

1. Schaltungsanordnung zur Ionenstrommeßung im Verbrennungsraum einer Brennkraftmaschine, bestehend aus
a) einer Zündspule (Tr, Trₛ) mit Primär- und Sekundärkreis,
b) einer im Sekundärkreis angeordneten Zündkerze (Zk), die gleichzeitig als Ionenstromsonde dient,
c) bei der nach erfolgter Zündung im Verbrennungsraum im Sekundärkreis ein Spannungssignal (Uₛₑₖ) erzeugt wird, dessen Amplitudenwert kleiner als die zur Zündung erforderliche Zündspannung ist und in Abhängigkeit des Ionisationsgrades der Zündfunkenstrecke als Meßsignal des Ionenstromes ein moduliertes Spannungssignal (U_{sek,Ion}) im Sekundärkreis bewirkt,
**gekennzeichnet durch** folgende Merkmale:
d) es ist ein aus dem Primärkreis und einem Kondensator (C) aufgebauter steuerbarer Resonanzkreis aufgebaut, der von einer Regelschaltung (1) derart gesteuert wird, daß die zur Zündung erforderliche Zündenergie als bipolarer Zündstrom zur Verfügung steht und
e) ferner steuert diese Regelschaltung (1) im Anschluß an die Funkenbrennphase den Resonanzkreis derart an, daß sekundärseitig das für die Messung des Ionenstromes erforderliche Spannungssignal (U_{sek,Ion}) als Wechselspannungssignal erzeugt wird.

2. Schaltungsanordnung nach Anspruch 1, **dadurch gekennzeichnet, daß** die Zündspule (Tr) mit einer Primärwicklung und einer Sekundärwicklung aufgebaut ist und daß das Meßsignal des Ionenstromes mittels einer im Sekundärkreis der Zündspule (Tr) angeordneten Meßanordnung (4) abgegriffen wird.

3. Schaltungsanordnung nach Anspruch 1, **dadurch gekennzeichnet, daß** die Zündspule (Tr) als Spartransformator ausgebildet ist und daß das Meßsignal des Ionenstromes primärseitig abgegriffen wird.

4. Schaltungsanordnung nach einem der vorangehenden Ansprüche, **dadurch gekennzeichnet, daß** die Ansteuerung des Resonanzkreises zur Erzeugung des Meßsignales für den Ionenstrom derart erfolgt, daß die Differenz zwischen den Frequenzen des für die Messung des Ionenstromes erforderlichen Spannungssignales Uₛₑₖ und des erwarteten lonenstromsignales (U_{Ion}) möglichst groß ist.

5. Schaltungsanordnung zur Ionenstrommessung im Verbrennungsraum einer Brennkraftmaschine bestehend aus
a) einer Zündspule (Tr) mit Primär-und Sekundärkreis,
b) einer im Sekundärkreis angeordneten Zündkerze (Zk), die gleichzeitig als Ionenstromsonde dient,
c) bei der nach erfolgter Zündung im Verbrennungsraum im Sekundärkreis ein Spannungssignal (Uₛₑₖ) erzeugt wird, dessen Amplitude kleiner als die zur Zündung erforderliche Zündspannung ist und in Abhängigkeit des Ionisationsgrades der Zündfunkenstrecke als Meßsignal des Ionenstromes ein moduliertes Spannungssignal (U_{sek,Ion}) im Sekundärkreis bewirkt,
**gekennzeichnet durch** folgende Merkmale:
d) es ist ein aus dem Primärkreis und einem Kondensator (C) aufgebauter steuerbarer Resonanzkreis vorgesehen, der von einer Regelschaltung (1) derart gesteuert wird, daß die zur Zündung erforderliche Zündenergie als bipolarer Zündstrom zur Verfügung steht,
e) die Zündspule (Tr) ist als Spartransformator ausgebildet,
f) die Primärseite der Zündspule (Tr) ist mit einem Schaltnetzteil (5) verbunden, das eine im Mittelspannungsbereich liegende Gleichspannung liefert und
g) im Anschluß an die Funkenbrennphase dient die von dem Schaltnetzteil (5) erzeugte Gleichspannung als Meßsignal des Ionenstromes.

## Claims

1. A circuit arrangement for measuring ionic currents in the combustion chamber of an internal combustion engine, consisting of
a) an ignition coil (Tr, Trₛ) having a primary and a secondary circuit,
b) a spark plug (Zk) disposed in the secondary circuit and simultaneously serving as an ionic current probe,
c) wherein, following the conclusion of an ignition process in the combustion chamber, a voltage signal (Uₛₑₖ) is produced in the secondary circuit, the amplitude value of said signal being less than the ignition voltage required for the ignition process and causing, in the secondary circuit in dependence on the level of ionisation in the ignition spark path, a modulated voltage signal (U_{sek,Ion}) as the measurement signal of the ionic current,
**characterised by** the following features:
d) it is formed by a controllable resonant circuit consisting of the primary circuit and a capacitor (C), said resonant circuit being controlled by a regulating circuit (1) in such a manner that the ignition energy required for the ignition process is made available in the form of a bipolar ignition current and
e) furthermore, this regulating circuit (1) controls the resonant circuit following the end of the spark-combustion phase in such a manner that the voltage signal (U_{sek,Ion}) required for measuring the ionic current is produced in the form of an alternating voltage signal at the secondary side.

2. A circuit arrangement in accordance with Claim 1, **characterised in that** the ignition coil (Tr) is formed by a primary winding and a secondary winding, and **in that** the measurement signal of the ionic current is tapped-off by means of a measuring arrangement (4) disposed in the secondary circuit of the ignition coil (Tr).

3. A circuit arrangement in accordance with Claim 1, **characterised in that** the ignition coil (Tr) is in the form of an autotransformer, and **in that** the measurement signal of the ionic current is tapped-off at the primary side.

4. A circuit arrangement in accordance with any of the preceding Claims, **characterised in that** the control of the resonant circuit for producing the measurement signal for the ionic current is effected in such a manner that the difference between the frequencies of the voltage signal Uₛₑₖ required for the measurement of the ionic current and the expected ionic current signal (U_{Ion}) is as large as possible.

5. A circuit arrangement for measuring ionic currents in the combustion chamber of an internal combustion engine, consisting of
a) an ignition coil (Tr) having a primary and a secondary circuit,
b) a spark plug (Zk) disposed in the secondary circuit and simultaneously serving as an ionic current probe,
c) wherein, following the conclusion of an ignition process in the combustion chamber, a voltage signal (Uₛₑₖ) is produced in the secondary circuit, the amplitude of said signal being less than the ignition voltage required for the ignition process and causing, in the secondary circuit in dependence on the level of ionisation in the ignition spark path, a modulated voltage signal (U_{sek,Ion}) as the measurement signal of the ionic current.
**characterised by** the following features:
d) there is provided a controllable resonant circuit consisting of the primary circuit and a capacitor (C), said resonant circuit being controlled by a regulating circuit (1) in such a manner that the ignition energy required for the ignition process is made available in the form of a bipolar ignition current,
e) the ignition coil (Tr) is in the form of an autotransformer,
f) the primary side of the ignition coil (Tr) is connected to a switched-mode power unit (5) which delivers a DC voltage lying in the mid-voltage range and
g) the DC voltage produced by the switched-mode power unit (5) serves as the measurement signal of the ionic current following the end of the spark-combustion phase.

## Revendications

1. Montage pour la mesure d'un courant ionique dans la chambre de combustion d'un moteur à combustion interne, constitué par
a) une bobine d'allumage (Tr, Trₛ) comportant un circuit primaire et un circuit secondaire,
b) une bougie d'allumage (Zk), qui est disposée dans le circuit secondaire et sert simultanément de sonde pour le courant ionique,
c) lors d'un allumage réussi dans la chambre de combustion, il apparaît dans le circuit secondaire un signal de tension (Uₛₑₖ), dont la valeur d'amplitude est inférieure à la tension d'allumage nécessaire pour l'allumage et produit, en fonction du degré d'ionisation de la section de production d'étincelles d'allumage, en tant que signal de mesure du courant ionique, un signal de tension modulé (U_{sek,Ion}) dans le circuit secondaire,
**caractérisé par** les caractéristiques suivantes:
d) il est prévu un circuit résonnant commandable, constitué par le circuit primaire et un condensateur (C) et qui est commandé par un circuit de régulation (1) de telle sorte que l'énergie d'allumage nécessaire pour l'allumage est disponible en tant que courant d'allumage bipolaire, et
e) en outre ce circuit de régulation (1) commande le circuit résonnant, à la suite de la phase de combustion avec les étincelles, de telle sorte qu'il apparaît sur le côté secondaire, en tant que signal de tension alternative, le signal de tension (U_{sek,Ion}) nécessaire pour la mesure du courant ionique.

2. Montage selon la revendication 1, **caractérisé en ce que** la bobine d'allumage (Tr) est constituée par un enroulement primaire et par un enroulement secondaire et que le signal de mesure du courant ionique est prélevé au moyen d'un dispositif de mesure (4) disposé dans le circuit secondaire de la bobine d'allumage (Tr).

3. Montage selon la revendication 1, **caractérisé en ce que** la bobine d'allumage (Tr) est agencée sous la forme d'un autotransformateur et que le signal de mesure du courant ionique est prélevé sur le côté primaire.

4. Montage selon l'une des revendications précédentes, **caractérisé en ce que** la commande du circuit résonnant s'effectue pour la production du signal de mesure pour le courant ionique de telle sorte que la différence entre les fréquences du signal de tension (Uₛₑₖ) nécessaires pour la mesure du courant ionique et du signal de courant ionique attend (U_{Ion}) est aussi grande que possible.

5. Montage pour la mesure du courant ionique dans la chambre de combustion d'un moteur à combustion interne, constitué par:
a) une bobine (Tr) comportant un circuit primaire et un circuit secondaire,
b) une bougie d'allumage (Zk), disposée dans le circuit secondaire et qui sert simultanément de sonde pour le courant ionique,
c) lors d'un allumage réussi dans la chambre de combustion, il apparaît dans le circuit secondaire un signal de tension (Uₛₑₖ), dont l'amplitude est inférieure à la tension d'allumage nécessaire pour l'allumage et produit, en fonction du degré d'ionisation de la section de production d'étincelles d'allumage, en tant que signal de mesure du courant ionique, un signal de tension modulé (U_{sek,Ion}) dans le circuit secondaire,
**caractérisé par** les caractéristiques suivantes:
d) il est prévu un circuit résonance commandable, constitué par le circuit primaire et un condensateur (C) et qui est commandé par un circuit de régulation (1) de telle sorte que l'énergie d'allumage nécessaire pour l'allumage est disponible en tant que courant d'allumage bipolaire, et
e) la bobine d'allumage (Tr) est agencée sous la forme d'un autotransformateur,
f) le côté primaire de la bobine d'allumage (Tr) est relié à une partie de réseau commuté (5), qui délivre une tension continue située dans la gamme des moyennes de tension, et
g) à la suite de la phase de combustion avec les étincelles, la tension continue, produite par la partie de réseau commutée (5) sert de signal de mesure du courant ionique.
